(19) Europäisches Patentamt
European Patent Office
Office européen des brevets

(11) EP 3 010 255 A1

(12) EUROPEAN PATENT APPLICATION

(43) Date of publication:
20.04.2016 Bulletin 2016/16

(51) Int Cl.:
*H04W 4/02* (2009.01)

(21) Application number: 14382398.7

(22) Date of filing: 17.10.2014

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(71) Applicant: Telefonica Digital España, S.L.U.
28013 Madrid (ES)

(72) Inventor: Leontadis, Ilias
28013 Madrid (ES)

(74) Representative: Carlos Hernando, Borja
Garrigues IP, S.L.P.
Hermosilla, 3
28001 Madrid (ES)

(54) **Method, system, user terminal and computer programs for estimating user terminal mobile paths through cellular network and map information**

(57) The method comprising: providing a time sequence of mapped associations between a user terminal and a plurality of cell sectors on a first map; splitting the time sequence into user terminal stationary and mobile state sub-sequences; calculating user terminal locations from the user terminal stationary sub-sequences and marking them as endpoints locations in the first map; for at least one of said user terminal mobile subsequence, identifying geographical locations on the first map in which a probability of the user terminal having travelled through during the mapped association has a high probability value; adjusting weights of the high probability values based on streets or passageways included in second map; and estimating user terminal mobile paths by applying a street routing algorithm over the weighted high probability values of the second map.

Fig. 1

EP 3 010 255 A1

**Description**

<u>Field of the invention</u>

The present invention generally relates to cellular networks methods and systems. In particular, the invention relates to a computer implemented method, a system, a user terminal and computer programs for estimating user terminal mobile paths through cellular network and map information.

<u>Background of the invention</u>

Through their normal operation, cellular networks are a repository of continuous location information from its subscribed terminal devices. Such information, however, comes at a coarse granularity both in terms of space, as well as time. For otherwise inactive devices, location information can be obtained at the granularity of the associated cellular sector, and at infrequent points in time, that are sensitive to the structure of the network itself, and the level of mobility of the device/terminal.

Mobility management is a fundamental function of the cellular infrastructure. However, unlike recent public belief, in normal operation a cellular network is not in a position to accurately localize every single subscriber in space. In most cellular infrastructures today, mobile subscribers leave a trace of their associated tower, only when making/receiving calls, sending/receiving SMS, crossing Location Area Codes (LACs) or are routinely polled by the network due to stale information that exceeds a preconfigured duration (on the order of a few hours). These traces are referred as Network Events (NE). Full handover information (all the sectors crossed by a mobile device) is further accessible through RNC-level monitoring.

The spatial granularity of the location information in cellular NEs is at best that of a sector (BTS), which is often quite large. Frequently the location is even less accurate as the BSC/RNCs associate mobiles to nearby cell sectors but not the nearest one, in order to balance load. The temporal granularity of the location information heavily depends on subscriber activity in terms of either movement or use of the network. Arguably mobile subscribers use the network more or less continuously because of data services, but cell boundaries are carefully chosen to minimize the number of signaling messages for handovers, and inactive mobiles are paged only on the timescale of hours.

Most significantly, a mobile is associated with only a single cell sector at a time. There is no information on the set of cell sectors that are within range of a subscriber, and there is no measurement of the signal strength (i.e. RSSI) with which a mobile can hear its associated cell sector or vice versa. While some of this information does reach the BSC/RNC, logging it would be a major departure from current operational practices such that present invention does not consider that possibility.

<u>Description of the Invention</u>

Embodiments of the present invention address these and/or other needs by providing a computer implemented method for estimating user terminal mobile paths through cellular network and map information. The method is able to parse the continuous sector observations and identify the segments corresponding to a stationary position, and the segments corresponding to actual mobility. Stationary segments are used, that typically feature multiple sector observations, to derive more accurate estimations for the stationary position. Using those enhanced locations that go beyond the sector coverage area, an algorithm is developed able to extract mobility paths between stationary points.

The path estimation algorithm characteristically uses cellular topology information to identify the areas on a map that are consistent with the observed sector associations, and weighs them according to the likelihood for a mobile subscriber to have connected, via a user terminal through 2G/3G or 4G, with a cell tower from different locations within the respective sector coverage area. It then biases the route selection to pass through high probability areas while respecting the underlying road network.

Therefore, the method provides a time sequence of mapped associations between a user terminal and a plurality of cell sectors on a first map including geographical cell sector locations. Then the provided time sequences are split into user terminal stationary state sub-sequences and user terminal mobile state sub-sequences. Once those two different time sequences are split, user terminal locations from the user terminal stationary sub-sequences are calculated marking the user terminal locations as endpoints locations in the first map. Following that and for at least one of the user terminal mobile sub-sequence, geographical locations on the first map are identified in which a probability of the user terminal having travelled through during the mapped association has a high probability value. Finally, the weights of the high probability values of said identified geographical locations are adjusted based on streets and/or passageways included in a second map and a street routing algorithm is applied over the weighted high probability values of the second map.

In an embodiment, the weights of the high probability values of the identified geographical locations are adjusted depending on the length of the street, type of the street, mode of transportation in the street and/or speed limits of the street. Preferably, the street routing algorithm chooses the street and/or passageway of the second map having at least the shortest adjusted weight.

In an embodiment, given a position on the first map, the method further models the probability of the given position being associated with a specific sector of the plurality of cell sectors.

Preferably, each one of the plurality of cell sectors is defined by, the location of the cell, the orientation of the cell, the beam width of the cell and/or an intended spatial extent of the cell.

The user terminal stationary state sub-sequences involve the user terminal being in a same logical location (e.g. a building, a campus, a square, etc.) for more than a threshold time $\tau$.

Embodiments of the present invention also provide a user terminal, such as a Smartphone or a tablet, among others, comprising a computer readable medium and a software program having program code instructions embedded in the computer readable medium for receiving a signal corresponding to the estimated user terminal mobile paths, and for presenting information relating to the estimated user terminal mobile paths to at least one user.

Other arrangements of embodiments of the invention that are disclosed herein include a system configured to implement one or more aspects of the disclosed methods, as well as software programs to perform the method embodiment steps and operations summarized above and disclosed in detail below. More particularly, a computer program product is one embodiment that has a computer-readable medium including computer program instructions encoded thereon that when executed on at least one processor in a computer system causes the processor to perform the operations indicated herein as embodiments of the invention.

Present invention enables the extraction of mobility paths from sparse spatial-temporal cellular location information. Using more than 3,000 mobility trajectories, it has been estimated that present invention is able to estimate the stationary locations with a median accuracy of 230 meters. When the terminal is mobile, present invention can estimate its mobility path with a median error of 70 meters. To achieve such accuracy, present invention takes into account the cellular network topology, as well as geographic information. Mobility path accuracy improves with its length and speed, and counter to the inventor's intuition, accuracy appears to improve in rural areas. Present invention allows location services for the new generation of connected mobile terminals that may feature neither GPS nor WiFi due to cost, size, or energy constraints.

An application of the proposed method would consider the following scenarios:

- Customer insights: Present invention can be used to provide better accuracy to products like smart-steps where cell tower data are used to calculate footfall in given areas. This can help business owners to understand their crowd and to plan future expansions (e.g. where to open new shops).
- Urban planning: Present invention can help city planners to understand how people move within a certain area (e.g. city) and help them to plan their future development (e.g. constructing roads, plan road works and diversions, etc.).
- Place/Event recommendation: Present invention can help to identify areas of interest within a city. For example, a system can provide recommendations about places (e.g. where people like me are right now in the city) or events (e.g. is there a special event taking place right now).
- Traffic characterization: The path estimation can find traffic jams, hotspots that can help urban planners to load-balance road traffic (e.g. by adjusting traffic lights or changing road directions). Also the information can be given directly to users by updating the information on their personal navigation devices (e.g. TomTom®).
- Public transit optimization: Using the path estimation method described the means of transportation can be also identified. This information can be used to optimize the public transit system (e.g. optimize routes and stops).
- Target advertising: By understanding how people move in a city present invention can provide targeted advertisements.
- Car sharing: Through the proposed method, commuting patterns (time and origin/destination) can be identified. Therefore, the invention can propose car sharing for those who have the similar routes.
- Fleet management: Companies can monitor in real time where their assets (being vehicles or devices) are.
- Parental Monitoring: Parents can monitor the mobile terminals of their children and have geo-fenced alerts.
- Insurance telematics: As people carry their mobile phones, they can be tracked as they drive. Pay-per-mile schemes can be used to provider fairness in terms of insurance premiums.
- Internet of Things localization: As millions of mobile terminals will be equipped with GSM modems, the proposed method can be used to provide them with location information and to perform asset tracking.

Brief Description of the Drawings

The previous and other advantages and features will be more fully understood from the following detailed description of embodiments, with reference to the attached drawings, which must be considered in an illustrative and non-limiting manner, in which:

Fig. 1 is a diagram that shows an example of the method steps implemented by the processor for estimating user terminal mobile paths through cellular network and map information in accordance with embodiments of the present invention.

Fig. 2 illustrates components of a computer system and the iteration with the user terminal in accordance with embodiments of the present invention.

Fig. 3 is an example of the coverage PDF for sectors having beam width of 60 degrees (left) and 120 degrees (right).

Fig. 4a illustrates an example of how the stationary and mobile sectors are identified.

Fig. 4b illustrates an example of how the high probability areas are calculated.

Fig. 4c illustrates an example of how the path through the high-probability areas is calculated.

Detailed Description of the Invention

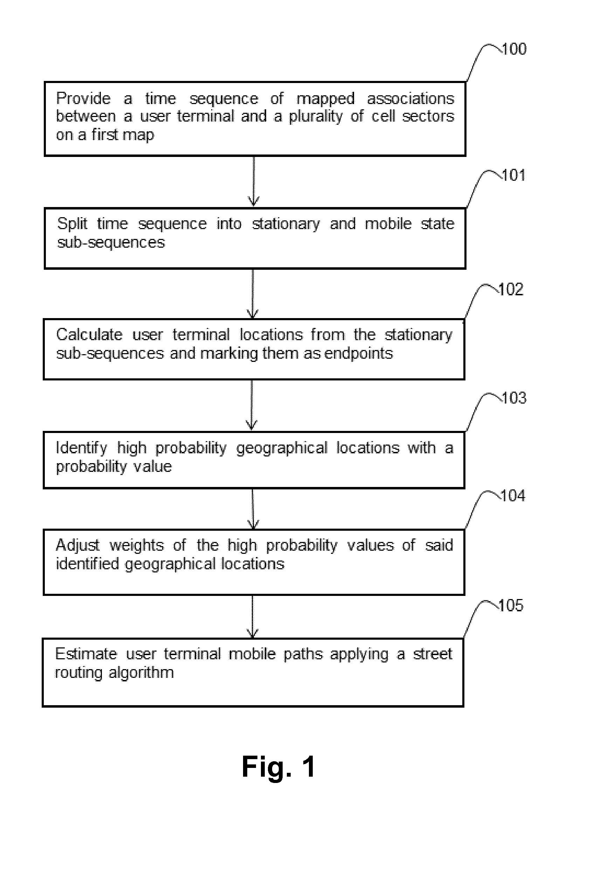

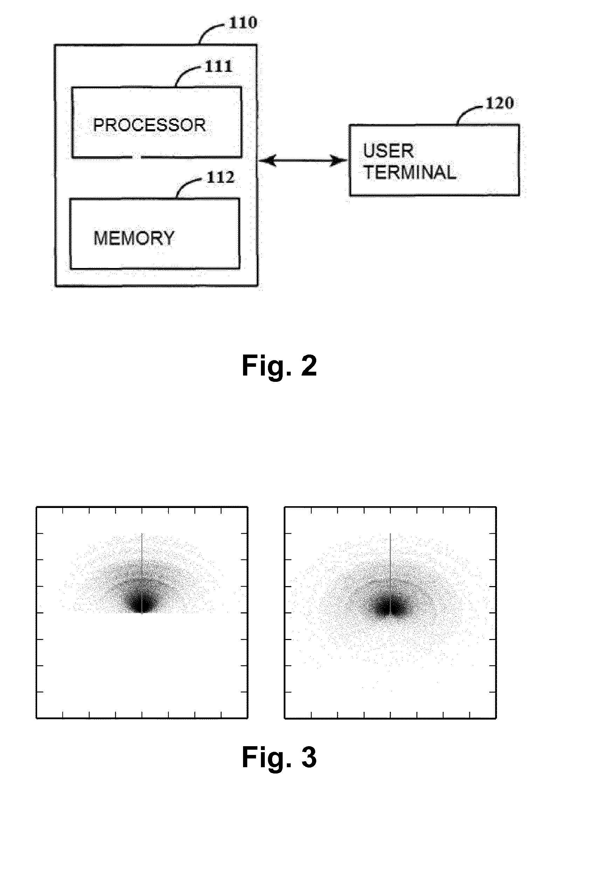

Fig. 1 illustrates the overall method steps executed by a processor of a computer system for estimating user terminal mobile paths through cellular network and map information. Components of the computer system are illustrated in Fig. 2. The computer system 110 at least includes a processor 111 having various hardware components including a central processing unit (CPU), among other components, and a memory 112. The memory 112 stores computer program code instructions that control the processes for executing the proposed method.

To interpret mobile associations with cell sectors, a first map/cell coverage map where a user/subscriber is likely to be while associated first needs to be modeled. That is, the coverage of the cell sectors needs to be known. Therefore, for each sector, a model for the expected coverage is built based on the information that is available to the network operator. Preferably, this information is stored in a first database (not illustrated) accessible by the processor 111 and at least includes the sector location, orientation, beam width, and the intended spatial extent of the installation (i.e., macro, micro, or femto cell). Moreover, the coverage models may be combined to identify the overlap between two sectors $S_i$ and $S_j$ to understand likely handover locations.

The mobile associations (step 100) are any indications that the subscriber was "connected" to a cell tower at some point in time. More specifically they are in the form of (time, tower_ID). The associating is logged when certain events occur *i*) every time the subscriber makes/receives a call or SMS; *ii*) every time the subscriber is switching from one cell tower to another (handovers); *iii*) periodically (to notify the network that the terminal is still there); *iv*) when requested by the network and/or *v*) whenever any packet (e.g., data to update e-mail) are exchanged with the cell tower.

Then, (step 101) stationary and mobile segments are identified. Present invention models mobile subscribers as alternating between stationary and mobile states. Since different estimation procedures are appropriate for the different states, present invention splits the cellular observations into stationary and mobile state sub-sequences. A stationary sequence is defined as the sequence of cell sectors S a mobile terminal sees while in the same logical location (e.g. a building, a square, a campus, etc.) for more than a threshold time $\tau$, preferably 15 minutes but it could be an hour, or even a few hours. A mobile sequence is defined as the sequence between two stationary sequences.

Once the two different types of sub-sequences are split, (step 102) user terminal locations are calculated from the user terminal stationary sub-sequences. To generate a path present invention needs to identify the two end-point locations. During each stationary sequence, a number of sectors may be observed. Therefore, the whole set of observed sectors can be used over time to derive a more accurate estimate of the terminal's fixed location than using the whole coverage area of a single sector. The proposed method preferably uses the coverage area of each cell tower plus the duration the terminal was associated with each sector.

For each mobile sub-sequence, a number of intermediate sectors are observed between the stationary sub-sequences that serve as endpoints. (Step 103) The coverage of the observed sectors indicates the areas that the terminal traveled through with high probability. These areas typically constrain the path of the mobile subscriber.

The previous steps give estimates of the starting and ending locations of the path of a mobile subscriber, plus high-probability intermediate areas. Apart from that, and because humans typically move on streets, passageways and/or public transport routes taking fairly direct trips, present invention uses the identified high-probability areas to bias route search over a second map/Geographic Information System (GIS) map. More specifically, present invention (step 105) applies a street-routing algorithm over the GIS map where the streets, passageways and/or public transport routes have adjusted weights based on the inferred coverage.

As a preferred option, the street-routing algorithm, an A* algorithm (but any routing algorithm can be used such as Dijstra, two-direction Dijstra, hierarchical routing, etc.), captures the idiosyncratic deviations the subscriber makes from shortest paths.

Next each of the previous described steps will be detailed.

Model the coverage of sectors

The coverage map is built to estimate the likelihood that a mobile subscriber m at a particular position relative to sector S is associated with the sector. It is convenient to use a polar coordinate model for positions. The likelihood is then a function of three parameters: the power P of the sector; the distance d between the terminal and the cell tower; and the angle factor $\varphi$ of the terminal relative to the sector. The angle factor is defined as the ratio of the polar angle of the mobile relative to the major axis of the sector and the beam width of the sector. Thus $\varphi = 0$ represents the major axis of the sector while $\varphi = 1$

represents the nominal extent of the antenna beam.

Rather than compute the coverage map analytically, present invention preferably uses ground truth data of associations at different locations to approximate it empirically. The result is the coverage probabilities as a PDF that is denoted by $W_P$ (d, $\varphi$), using the same notation for parameters as explained above.

The association probability falls off roughly exponentially with distance d (left side) and more linearly with angle factor $\varphi$ (right side). The coverage map is treated as fixed even though the probability of associating to a particular sector changes with RF conditions, as this works sufficiently well in practice. Fig. 3 shows the coverage PDF directly for sectors with beam widths of 60 and 120 degrees. For the efficient computation, present invention discretizes space into 15m $\times$ 15m grid squares over the entire coverage map. For every square $g$ in the grid present invention derives the probability of connecting to the sector S by integrating the coverage PDF $W_P$ (d, $cp$) over all points $x$ in the square $g$.

$$Q(g, S) = \int_{x \in g} W_P (d_x, \varphi_x)$$

$Q(g, S)$ are the probability grids. In the steps that follow, these grids are used as the most convenient form of the coverage map. It should be recalled that present invention has as input a discrete trajectory in the form of a sequence of time-stamped cell sector associations. This sequence has to be split into stationary and mobile segments, therefore to do so, present invention builds on the coverage PDF in the form of the probability grid $Q(g, S)$.

Identification of stationary and mobile segments

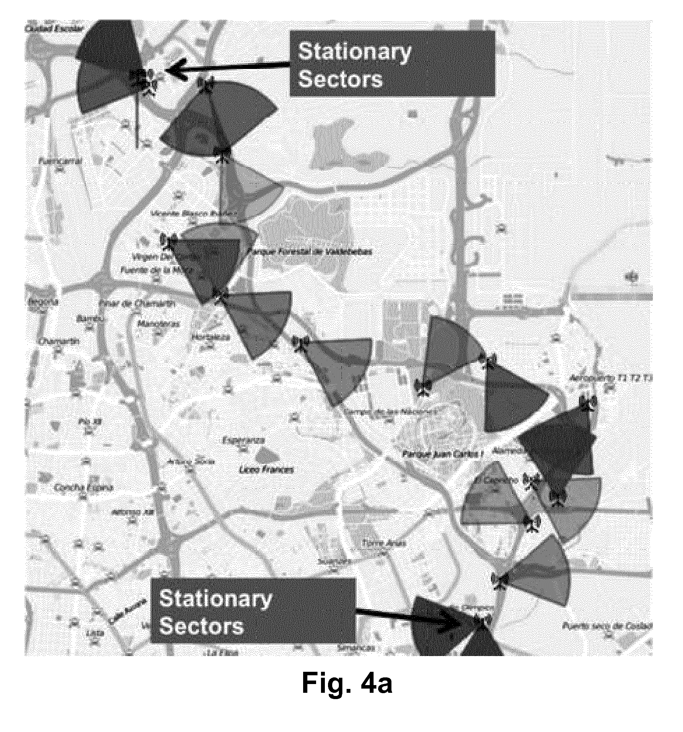

With reference to Fig. 4a it is illustrated the identified stationary and mobile sectors. Two sectors $S_1$ and $S_2$ are called adjacent sectors if there is a square $g$ in the grid such that $Q(g,S1) > 0$ and $Q(g,S2) > 0$. That is, a mobile terminal can connect to both sectors without moving. A sequence of sectors $S_1...S_n$ it is said to be stationary if every two sectors are adjacent and the duration of the sequence as determined by its timestamps is greater than a threshold time $\tau$. That is, the mobile terminal can connect to all sectors without moving and this situation persists for long enough that non-adjacent handovers would likely have occurred if it was actually moving.

The stationary periods are extended as far along the sequence as possible. Then present invention defines the sequence of sectors between two stationary periods (which cannot itself be stationary) to be a mobile period.

Finding the location while stationary

All the information in the stationary period is used to calculate the stationary location because an accurate endpoint is instrumental in inferring an accurate route for the mobile segment.

If a stationary segment consists of only one sector S, the most likely position is simply the square grid $g$ that maximizes $Q(g, S)$. When the stationary period contains several sectors $S_1... S_n$ all of the sectors can be used to refine the user terminal location. To do so, the point $g$ that maximizes the sum of probabilities $Q(g, S_i)$ over the sectors is found weighted by the amount of time $\tau_i$ the subscriber was connected to the sector $S_i$. That is:

$$g^* = \arg \max_g \sum_{i=1}^{n} Q(g, S_i)\tau_i.$$

For a complete path consisting of a starting stationary period, mobile period, and ending stationary period, this procedure gives an estimated user terminal location for the start and end points. It has to be noted that the end point for one path forms the start period for the next path with no discontinuities because they share the same stationary period.

Likelihood of crossing a square grid

As a final input to the path estimation procedure, the mobile sub-sequences are mined for locations that the subscriber passes through with high-probability. In the next step, present invention will bias the estimated path to follow the high-probability locations.

It should be recalled that for a square grid $g$, $Q(g, S)$ is the probability that a subscriber in $g$ is connected to S. For each square grid $g$ the *score* $\rho(g)$ of the mobile segment $S_1... S_n$ is denoted as:

$$\rho(g) = \sum_{i=1}^{n} Q(g, S_i).$$

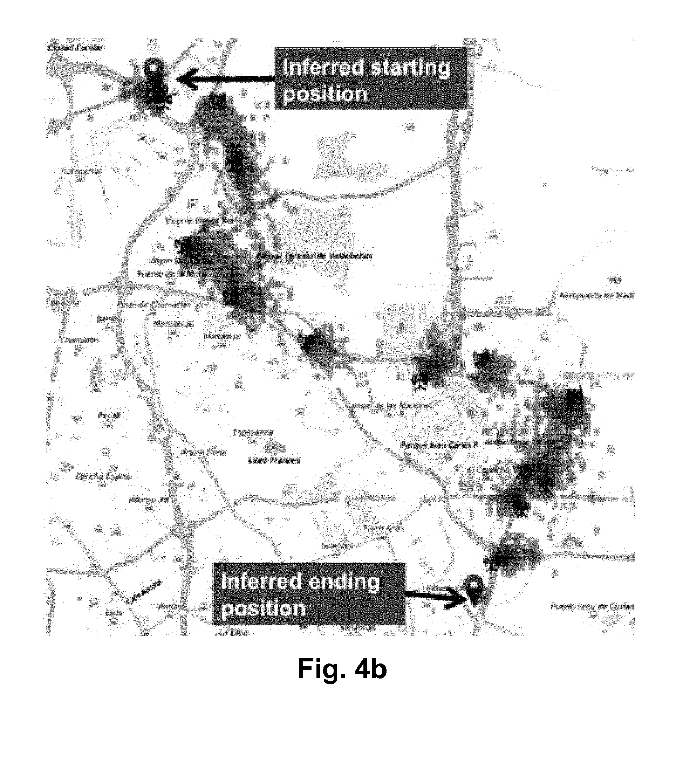

That is, the union of the coverage PDF is computed for all sectors in the mobile segment. This value is no longer a probability, but the higher the value for a square $g$ the more likely that the path of the subscriber passed through that square. Observe that summing the coverage PDFs also increases the weight on locations that overlap between sectors by "double counting" them. These are precisely the most likely handover locations. An example of the calculated probabilities is shown in Fig. 4b.

Calculating the mobile path

To improve accuracy present invention uses the road network to constrain the path between the stationary end-points.

Present invention approach is to use the values of the squares p(g) to bias routing on the road network. By using the values, present invention preferentially searches for a route in the "corridor" formed by the coverage areas of all sectors in the mobile segment. High values close to the shortest path represent likely deviations.

Preferably, present invention implementation, in an embodiment, uses OpenStreetMaps (OSM), which is not limitative, as any map representation can be used. For instance Google Maps®, Bing Maps®, Nokia Maps®, or even any navigation systems.

OSM is a community-driven repository that contains data about roads, POIs, railway connections, etc. and is designed to be used for navigation purposes as it includes information for routing by many modes including car, foot and bicycle. The OSM data can be thought of as a graph $G = (V,E)$ of the road network. Nodes $V$ represent the geographical locations of intersections or points along curved road segments, which each edge represents a directional road-segment between two nodes.

Initial edge weights

For each edge $e \in E$ an initial weight, $W(e) \in R$ is assigned that represents the *expected time* that is required to traverse it. This weight may depend on: *i)* the length of the road segment; *ii)* the type of the road segment (e.g., motorway, primary, secondary, footpath); and/or *iii)* the mode of transport (e.g., walking, driving). The required information and the default values of these weights for each mode of transport are therefore calculated based on the OSM recommendations. It has to be noted that for some means of transport certain roads might be restricted (e.g., motorways cannot be used for walking routes).

Modifying the weights based on mobile segment sectors $S_1 ... S_n$ after calculating the default weights for every road segment, present invention adjusts them based on the scores of squares in the grid. Each road segment e crosses several square grids $g_1 ... g_l$. Present invention wants to up-weigh roads with high scores and down-weigh roads with low scores to prefer locations that the subscriber crossed with high probability, hence the invention, in an embodiment, adjusts the weight of the segment e heuristically as:

$$\bar{W}(e) = \frac{W(e)}{\frac{1}{l}\sum_{i=1}^{l} \rho(g_i) + \epsilon \max \rho(g)}$$

The use of $\epsilon$ allows the route to gracefully handle gaps in coverage due to low (zero) scores rather than require a major diversion. It basically allows balancing the tradeoff between the short/best routes and the routes that are close to the observed sectors. The inventors had experiment with various $\epsilon$ values and observed that as long as $\epsilon \leq 0.1$ the expected errors are insensitive of the choice of $\epsilon$.

Alternatively, any other form of weighting streets based on observed sectors can be applied. This includes time-evolving probabilities based on when a cell tower was observed.

Routing

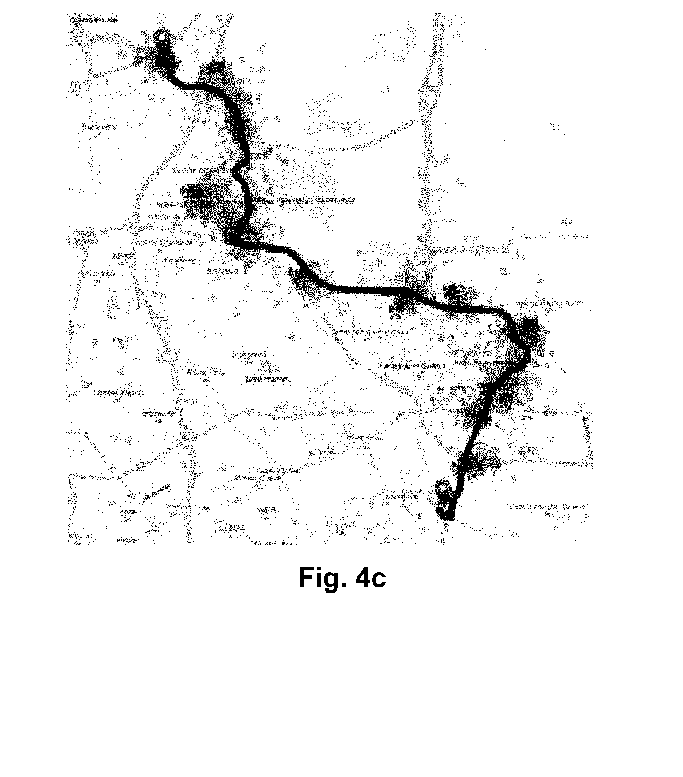

After adjusting the weights the A* algorithm, in an embodiment, is used to search the graph for a shortest weighted path between the start and end points. The A* algorithm is used for path-finding because running Dijkstra on the entire network graph is computationally expensive. A* algorithm is much faster and performs well in the invention setting. The resulting path in the graph is the final estimate for the path taken by the mobile subscriber. An example of such a path is given in Fig. 4c.

Even though in this specification to compute the utility functions Network Events (NEs) has been used, the proposed method also works with other types of locational data such as Call Detail Records (CDRs) or GPS traces. Moreover, additional information such as RSSI or reception with multiple towers can be also used. Even location-based service data, such as geo-tagged posts on Facebook®/Twitter® or check-ins Foursquare® can be used.

Likewise, even though to model the cell tower coverage the proposed method uses a data-driven model, other alternative methods such as simulation (with or without a GIS model), fingerprinting or a mathematical model can also be used. Furthermore, information such as the historical and active transmission power can be added to the model to improve the real-time estimation of coverage.

In the proposed method the type of the route, the speed limit, the type and/or the length of the street is used to calculate the initial weight that represents the time that is required to traverse a road/street/passageway segment. However, any other method such as historical data about average speed on certain road segments (per time-of the day and time-of-the-week) can be also used. Similarly, real-time information coming from sensor (e.g., traffic cameras, induction loops) can be used to provide a more realistic time that is required to travel between two locations. All these previous data that can be used for representing the required time to traverse the road/street/passageway preferably is stored in a second database (not illustrated either) accessible by the processor 111.

Other different ways to calculate the user mobile location during the stationary period, as an alternative to the use of the union of probabilities (weighted sum) of the observed sectors, could be based on the product of weighted or non-weighted probabilities. Furthermore, further information such as information about postcodes or aggregated statistics based on the past-history of the subscriber can be used to calculate a more accurate location.

The proposed method produces an optimal route between two locations by influencing the street-routing algorithm to prefer streets that are within the coverage. Although this is usually the case, it may not work well when the route is a loop or when a subscriber is having large deviations/detours. Therefore, present invention can force the route to pass through the coverage area of each sector.

Also, the proposed method uses fixed means of transport to estimate the path. However, based on the location and the time taken to move between two locations it has been detected whether a subscriber was walking, driving or taking public transport. Present invention can then use the appropriate path-planning algorithm (walking/driving/public transport) to estimate the best possible route.

While the foregoing is directed to embodiments of the present invention, other and further embodiments of the invention may be devised without departing from the basic scope thereof. For example, other aspects may be implemented in hardware or software or in a combination of hardware and software.

Additionally, the software programs included as part of the invention may be embodied in a computer program product that includes a computer useable medium. For example, such a computer usable medium can include a readable memory device, such as a hard drive device, a flash memory device, a CD-ROM, a DVD/ROM, or a computer diskette, having computer readable program code segments stored thereon. The computer readable medium can also include a communications link, either optical, wired, or wireless, having program code segments carried thereon as digital or analog signals. The scope of the present invention is determined by the claims that follow.

**Claims**

1. A computer implemented method for estimating user terminal mobile paths through cellular network and map information, the method comprising:

   - providing (100) a time sequence of mapped associations between a user terminal and a plurality of cell sectors on a first map, the first map comprising geographical cell sector locations;
   - splitting (101) said time sequence into user terminal stationary state sub-sequences and user terminal mobile state sub-sequences;
   - calculating (102) user terminal locations from the user terminal stationary sub-sequences and marking them as endpoints locations in the first map;
   - for at least one of said user terminal mobile sub-sequence, identifying (103) geographical locations on the first map in which a probability of the user terminal having travelled through during said mapped association has a high probability value;
   - adjusting (104) weights of the high probability values of said identified geographical locations based on at least streets and/or passageways included in a second map; and
   - estimating user terminal mobile paths (105) by applying a street routing algorithm over the weighted high probability values of the second map.

2. The method of claim 1, wherein given a position on the first map further comprising modeling a probability of the given position being associated with a specific sector of the plurality of cell sectors.

3. The method of any of previous claims, wherein each one of the plurality of cell sectors is defined by, a location of the cell, an orientation of the cell, a beam width of the cell, and/or an intended spatial extent of the cell.

4. The method of any of previous claims, wherein the user terminal stationary state sub-sequences involve the user terminal being in a same logical location for more than a threshold time $\tau$.

5. The method of any of previous claims, comprising adjusting the weights of the high probability values of said identified geographical locations depending on the length of the street, type of the street, mode of transportation in the street and/or speed limits of the street.

6. The method of any of previous claims, wherein the street routing algorithm comprises choosing the street or passageway of the second map having at least the shortest adjusted weight.

7. A system for estimating user terminal mobile paths through cellular network and map information, the system comprising:

   a processor (111); and

a memory (112) having a plurality of computer program code instructions embodied thereon and configured to be executed by the processor, the plurality of computer program code instructions comprising instructions to:

- provide a time sequence of mapped associations between a user terminal and a plurality of cell sectors on a first map, the first map comprising geographical cell sector locations;
- split said time sequence into user terminal stationary state sub-sequences and user terminal mobile state sub-sequences;
- calculate user terminal locations from the user terminal stationary sub-sequences and marking them as endpoints locations in the first map;
- for at least one of said user terminal mobile sub-sequence, identify geographical locations on the first map in which a probability of the user terminal having travelled through during said mapped association has a high probability value;
- adjust weights of the high probability values of said identified geographical locations based on at least streets and/or passageways included in a second map; and
- estimate user terminal mobile paths by applying a street routing algorithm over the weighted high probability values over the second map.

8. The system of claim 7, further comprising a first database storing information defining the plurality of cell sectors, the defining information at least including location of the cell, orientation of the cell, beam width of the cell, and/or intended spatial extent of the cell.

9. The system of claims 7 or 8, further comprising a second database storing data defining the weights of the high probability values of said identified geographical locations, said data being based at least on the length of the street, type of the street, mode of transportation in the street and/or speed limits of the street.

10. A user terminal (120) comprising:

a computer readable medium; and
a software program having program code instructions embedded in the computer readable medium for receiving a signal corresponding to the estimated user terminal mobile paths according to claim 1, and for presenting information relating to the estimated user terminal mobile paths to at least one user.

11. A computer program product comprising program code instructions which when loaded into a computer system controls the computer system to perform each of the methods according to any one of claims 1 to 6.

Provide a time sequence of mapped associations between a user terminal and a plurality of cell sectors on a first map ⌒100

Split time sequence into stationary and mobile state sub-sequences ⌒101

Calculate user terminal locations from the stationary sub-sequences and marking them as endpoints ⌒102

Identify high probability geographical locations with a probability value ⌒103

Adjust weights of the high probability values of said identified geographical locations ⌒104

Estimate user terminal mobile paths applying a street routing algorithm ⌒105

# Fig. 1

**Fig. 2**

**Fig. 3**

Fig. 4a

**Fig. 4b**

**Fig. 4c**

**EUROPEAN SEARCH REPORT**

Application Number

EP 14 38 2398

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2012/115475 A1 (MIYAKE MOTOHARU [US] ET AL) 10 May 2012 (2012-05-10) <br> * abstract * <br> * paragraphs [0002] - [0209] * <br> * figures 10,35,38 * <br> ----- | 1-11 | INV. <br> H04W4/02 |
| A | US 2013/102334 A1 (KHORASHADI BEHROOZ [US] ET AL) 25 April 2013 (2013-04-25) <br> * abstract * <br> * paragraphs [0002] - [0093] * <br> ----- | 1-11 | |

TECHNICAL FIELDS SEARCHED (IPC)

H04W

The present search report has been drawn up for all claims

| Place of search | Date of completion of the search | Examiner |
|---|---|---|
| Munich | 18 March 2015 | Pandolfi, Alessandra |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 14 38 2398

This annex lists the patent family members relating to the patent documents cited in the above-mentioned European search report.
The members are as contained in the European Patent Office EDP file on
The European Patent Office is in no way liable for these particulars which are merely given for the purpose of information.

18-03-2015

| Patent document cited in search report | | Publication date | Patent family member(s) | | Publication date |
|---|---|---|---|---|---|
| US 2012115475 | A1 | 10-05-2012 | JP 2012141953 | A | 26-07-2012 |
| | | | US 2012115475 | A1 | 10-05-2012 |
| | | | US 2012115476 | A1 | 10-05-2012 |
| | | | US 2012115505 | A1 | 10-05-2012 |
| US 2013102334 | A1 | 25-04-2013 | US 2013102334 | A1 | 25-04-2013 |
| | | | US 2013236105 | A1 | 12-09-2013 |
| | | | US 2013236106 | A1 | 12-09-2013 |
| | | | US 2013238234 | A1 | 12-09-2013 |
| | | | WO 2013059197 | A2 | 25-04-2013 |

EPO FORM P0459

For more details about this annex : see Official Journal of the European Patent Office, No. 12/82